# EUROPEAN PATENT SPECIFICATION

(11) **EP 1 480 869 B1**
(45) Date of publication and mention of the grant of the patent: **26.04.2006**
(21) Application number: 03711880.9
(22) Date of filing: 10.02.2003
(51) Int. Cl.: B63B 1/36

(54) **SYSTEM FOR IMPROVING THE MANOEUVRABILITY OF A BOAT'S HULL AND FOR REDUCING ITS FRICTION WITH WATER**
SYSTEM ZUR VERBESSERUNG DER MANÖVRIERBARKEIT EINES SCHIFFSRUMPFS ZUR VERRINGERUNG SEINER REIBUNG MIT WASSER
SYSTEME AMELIORANT LA MANOEUVRABILITE D'UNE COQUE DE BATEAU ET REDUISANT SON FROTTEMENT SUR L'EAU

(30) Priority: 12.02.2002 IT MI20020265
(43) Date of publication of application: 01.12.2004
(73) Proprietor: Zadra, Felice, 20014 Nerviano (IT)
(72) Inventor: Zadra, Felice, 20014 Nerviano (IT)
(74) Representative: Riccardi, Sergio
(86) International application number: PCT/EP2003/001298
(87) International publication number: WO 2003/068587

(56) References cited:
- DE-C- 808 805
- DE-C- 918 793
- GB-A- 306 778
- GB-A- 819 411
- GB-A- 1 034 370
- US-A- 3 812 806

## Description

The present invention is about a system for improving the handiness of a boat's hull and for reducing its friction with water, having several advantages such as the outcome of increasing the service speed and of reducing the forces which act on the hull and cause its wear, as well as that of increasing the stability, timeliness, easiness, and swiftness of the manoeuvres and others that will become clear throughout the course of this description.

The movement of a body in an also moving incompressible fluid mass, and more specifically the movement of a boat in a stretch of water, it too subject to a movement such as the wave motion of the sea, responds to very complex physical laws which have been studied and developed by the field of hydrodynamics, the forces acting on the boat being numerous, among which friction has a considerable importance that is caused on its turn by many different factors.

It is clear and obvious that a body advancing in the water comes up against a resistance which is much greater than the one found in the air, and therefore the speed of boats are much lower than the speed of air or land vehicles.

Therefore the speed increase of a boat can be accomplished only by reducing the forces generated by the water which act on the boat. In order to achieve this object, up to now all the efforts were focused on raising the penetration coefficient by designing hulls which were as more tapering as possible, by reducing to a minimum the immersed part of the boat (catamarans) or by lifting it from the water during navigation (hydrofoil, hovercraft). In order to reduce friction, so far it has only been thought of designing hulls with the most possible polished and smoothest surfaces, as well as repellent to incrustations which also slow down the water sliding in addition to damaging the hull.

The present invention's object is that of tackling the friction problem in a revolutionary way, by equipping the boat with a mechanical system which helps the hull sliding over the water mass with the least possible friction.

This principle is valid for floating watercrafts as well as for underwater vessels.

Document No. DE-808,805 illustrates a device for reducing boat's hull friction with water, consisting in two large rotating cylinders, disposed in symmetrical position at the bow of the boat, with their rotation axis parallel or perpendicular with respect to the movement direction of said boat.

Document No. GB-306,778-A shows a device for reducing boat's hull friction with water comprising two rotating bodies, disposed at the bow of the vessel and having their rotation axis transverse to the boat direction of motion, which are positively rotated by means carried by the vessel in the direction such that the surfaces protruding from the external surface of the hull travel in aft direction.

However, these systems generally comprise two rotating bodies only, disposed in a well defined portion of the vessel, that is at the bow, and having their rotation axis substantially parallel or perpendicular to the longitudinal plane of symmetry of the hull, while the multiple forces acting on a boat's hull are present on the whole underwater surface of the vessel, and they can have variable directions.

Document No. GB-819,411-A shows a boat's hull provided with freely rotatable rollers on substantially its entire external surface below the water line, and deflactable braking flaps, independently operable on the port and starboard sides, on the bottom of the hull of the ship.

However, this document refers to rollers with the same shape only, and not to other rotating bodies of different configuration. Moreover, since the forces acting on a boat's hull do not have the same intensity in each section of said hull, the use of cylindrical bodies able to rotate in a single direction around a fixed axis does not completely solve the problem of reducing boat's hull friction with water.

The solution offered by the present invention arises from observing a similar concept applied to the case of solid bodies. If some freely rotating elements, hence moving with respect to one another, are interposed between two solid bodies, a (rolling) friction between the bodies will be created, being much lower than the (sliding) friction generated by their mutual slipping. The concept is thus that of applying the principle of the wheel to a watercraft, and the present invention describes the means necessary for making the hull slide on the water almost as if it were a road vehicle. The invention is defined by the features of claim 1.

The system according to the present invention therefore provides a number of freely rotating bodies, arranged on the hull's surface, which take up the majority of the forces exerted by the water flow on the boat.

Such bodies consist of bodies of revolution, such as balls, cylinders, spheroids, which are lodged in their corresponding housings made out of at least part of the hull and are made to rotate by the surrounding water, thus transforming the pressure and wake energy of the liquid mass into rotation work.

Said rotating bodies can be arranged on any part of the hull. It is obvious that those which are more important for reducing friction are placed on the stem and on the broadsides up to the boat midship section, preferably from the keel up to the waterline, but it is not excluded that the application of further rotating bodies also on the stern could bring additional improvements. Furthermore, such rotating bodies can also be applied on the very own keel or bottom of the boat, in order to facilitate the operations of laying up and of beaching small watercrafts, by assuming in this case the proper function of wheels or sliding rollers, as well as for reducing again the friction with the fluid medium.

Therefore, the main object of the invention is reducing both the global friction generated by the hull which is in continuous contact with water and the temporary friction areas on the strand zone, generated by the rising and falling of the waves.

Another object is the reinforcement of the hull's structure, thanks to the housing that lodge the freely rotating bodies, which increase the resistance and the elasticity of the same hull, at the same time guaranteeing the absorption of the hits caused by the waves. This occurs thanks to the main effect of dispersing the energy and the force of the breakers on the hull (the rotating body freely rotates by offering the least resistance to its endless rotation at each contact with the fluctuating movement). In this manner also the force of the most violent wave motion is cancelled out by the continuous free motion of the rotating bodies and the variation of the waves' stream is instantaneously absorbed by them.

A further object is the reduction the consumption of paints and of metal or plastic materials of the hull's structure thanks to the intense and continuous reduction of forces of friction, dispersed by the rotating bodies.

The materials used for making the rotating bodies can be any matter fit to achieve the desired result, without creating undesired secondary effects, such as for example the formation of rust due to the use of iron materials. The materials can be either firm or soft enough to absorb the impact with the medium or with other structures.

The size of the rotating body must be compatible and proportioned to the boat's total dimensions, without being an obstacle to the movement of the boat itself.

The size of the parts protruding from the hull (the outer part of the bodies) are minimum but enough for the attainment of the free movement, without becoming a potential cause of break down during the manoeuvres, or during the casual contact with harbour or navigation structures, or even spontaneously during the navigation. This latter action is particularly supported by the material employed, fit to absorb the boat's impact with the other materials present in the harbour, including the possible laying up. More specifically the outer dimensions must always guarantee the best possible impact with the water.

The inner dimensions can be varied according to the vessel but they can not be disproportionate with respect to the hull. This means that, except for a minimum outer part, the containment structure of the rotating body is incorporated in the hull, with the possibility of protruding inside the boat.

As for the number of rotating bodies to apply to the hull, the same considerations made for the dimensions are valid, meaning that the total number must be compatible with watercraft's size and must not represent an obstacle to its navigation.

More specifically, the rotating bodies should always guarantee the best impact and contact with the water or with said liquid medium.

The arrangement of the rotating bodies can be carried out with various modes:
1) continuously, in order to cover the whole surface of the boat's hull or the part in contact with the water or with said liquid medium;
2) On rows, with free spaces between them:
   a) Perpendicular with respect to the navigation axis and to the direction of boat's motion;
   b) Tilted backward or forward with respect to the axis of navigation and of the boat, with different angles, to be defined based on the boat's speed and typology;
   c) Mutually staggered;
   d) With broken lines;
   e) With interrupted lines;
   f) With waving lines.
3) With either a random arrangement or one regulated according to the studies on the hydrodynamic performance of the vessel.

At last, the structure of the rotating bodies must be such that they are allowed to rotate freely inside a housing made of a material which does not reduce, or does it in a small amount , the free rotation of the rotating body.

There are many and different possible materials to be employed: metal, preferably not iron so as not to cause any problems related to the formation of rust, plastic matter, rubber, vegetal, or of natural origin, even obtained through genetic engineering with various combinations between them in order to achieve the best free rotation effect of the rotating body, so as to absorb the forces exerted by the water flow on the boat.

In place of or in addition to the rotating bodies, with or without grooves, some elements made of blades, all of them arranged in the same direction, similar to the propellers of side-wheel riverboats are also provided. Furthermore, the surrounding water or liquid gets to the rotating bodies, besides by way of direct contact with the hull's surface, also through outer and/or inner surface channels, which, in the case of the inner channels it is adjustable up to the closure of the excess water, thus returning to the original setting of the hull, while, for the outer channels, a mobile device at the beginning of the groove modulates the incoming liquid with the possibility, in this case too, of getting back the hull's outline.

The blades can have several shapes, for example flat, spoon-like, flared, waved, or with openings of different sizes; the shapes hence vary according to the specific object and to the desired friction, with greater or lesser closeness, and with different depths and dimensions, again according to the desired effect.

The functions of the rotating bodies coupled to the blades can be summarized as follows:
1. an active role of the bladed balls emerges, which they are moving on an axis, but it is possible to imagine that this latter could freely rotate in more directions, despite keeping a firm connection with the vessel.
2. a purely passive role of dragging from the water side also exists, connected to the increased stability of the vessel.
3. an active role of hydrodynamic participation of the vessel, with the greater or lesser differentiated exposure also according to the immersion level or the affected side.

An improvement of the effects relative to the hull is achieved, more specifically the thrust force created by the water on the hull.

In addition to the reduction of friction, the following advantages are accomplished thanks to this combined system of rotating bodies, channels, and blades:
1. the direction can be changed more easily;
2. slowdown and quick braking of the vessel;
3. the motion and/or the acceleration of the vessel can be increased, together with or in place of the driving propeller or propellers;
4. swift and standing controlled manoeuvring, also with the rotation of the boat on its own axis;
5. increase of the stability and of the dynamic contact with the liquid medium, in strong instability or movement conditions of the water;
6. reduction of the physiologic hopping of the boat during very rough water or liquid medium conditions;
7. increased stability and handiness thanks to the effect produced by balls/blades device, with a reduction of the steersman's effort and of the used manual and/or automated systems.

By using the system according to the present invention, the immersed part no longer has the same geometry as when it was out of the water. More specifically, the blades carry out the anti-drift control, caused by the wind (sailing boat) and/or by the water (sailing or motor boat).

The under-body plays a parasite role because of the traction, due to the shape and friction, that the water exerts on it: the balls and the blades system allow to considerably reduce such negative effects on the navigation.

It is already enough a small reduction in order to achieve savings in terms of wasted energy and better handiness of the vessel.

The dispersion of the energy generated by "the wave system", very present on the stern, is counterbalanced by the balls through a both negative and positive pressure.

As a matter of fact, the system, which allows a fast water sliding on the under-body,
1. replicates a longer and more tapering hull;
2. allows to counterbalance the existing different pressure between the boat's two sides and it also
3. allows to counterbalance the existing turbulence underneath the naval craft, caused by the different pressure between the two sides, thanks again to the reduction of friction;
4. at last, the reduction of the turbulence on the stern, generated by the orderly sliding of the liquid on the balls, allows to sail at greater speed but using the same energy.

Therefore, the system represents the best compromise between the optimization of the resistances and the side stability, while the same result of reducing the length in order to increase the stability of the boat is replicated by the balls and the blades.

The description of some examples of the system according to the invention now follows, but it must be noticed that it is just a matter of giving a visual demonstration of how this system can be put into practice, however such illustrations must not be construed in any way as restrictive or comprehensive of the numerous embodiments that the system can take up in the general model of arranging the rotating bodies, channels, and blades on a boat's hull in order to reduce the friction with water, thus increasing the speed, the handiness, and the stability and consequently improving its performances and characteristics.

In the annexed drawings, the proportions are obviously completely distorted and only provide for an illustration of some possible embodiments of the system.

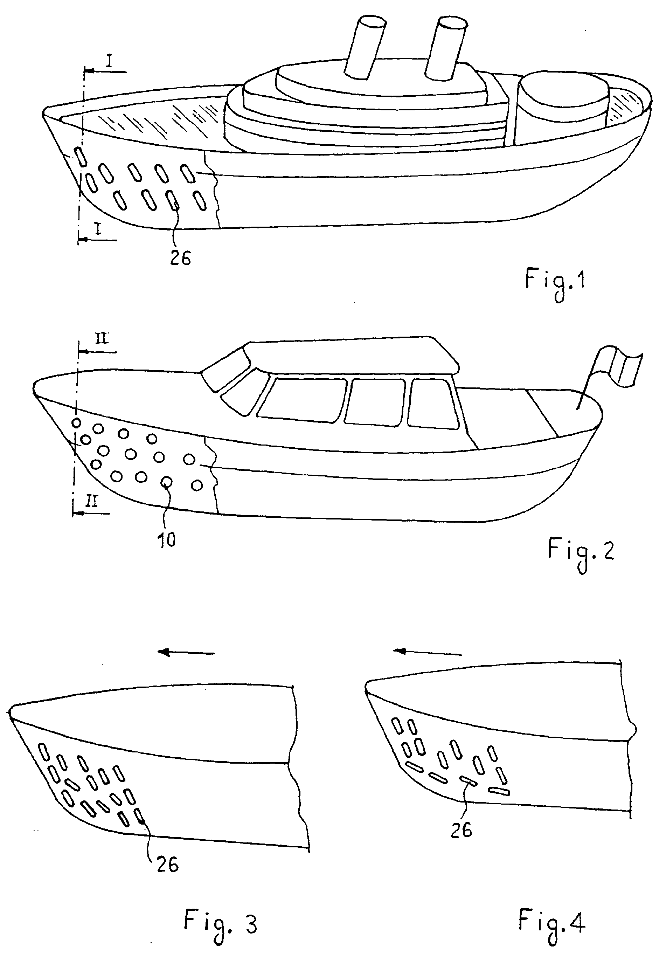

Figure 1 is an example of the rotating bodies consisting of cylindrical rollers put on a considerably big ship;
Figure 2 is an example of the rotating bodies consisting of balls put on a small cabin watercraft;
Figures 3 and 4 diagrammatically show the stem of a boat with different arrangements of the rotating bodies;

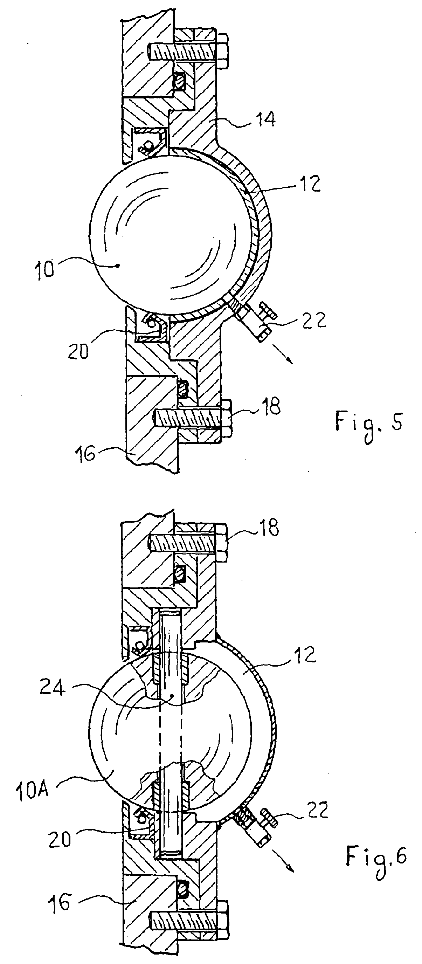

Figure 5 shows a ball 10 freely rotating inside its housing 12 closed by a plate 14 fixed to the hull 16 through bolts 18 and equipped with seals 20 and a small bleeder 22 of the potential condensates and residuals built up in the housing;
Figure 6 is a similar view of Figure 5 but wherein the ball 10A rotates around a fixed axis 24;

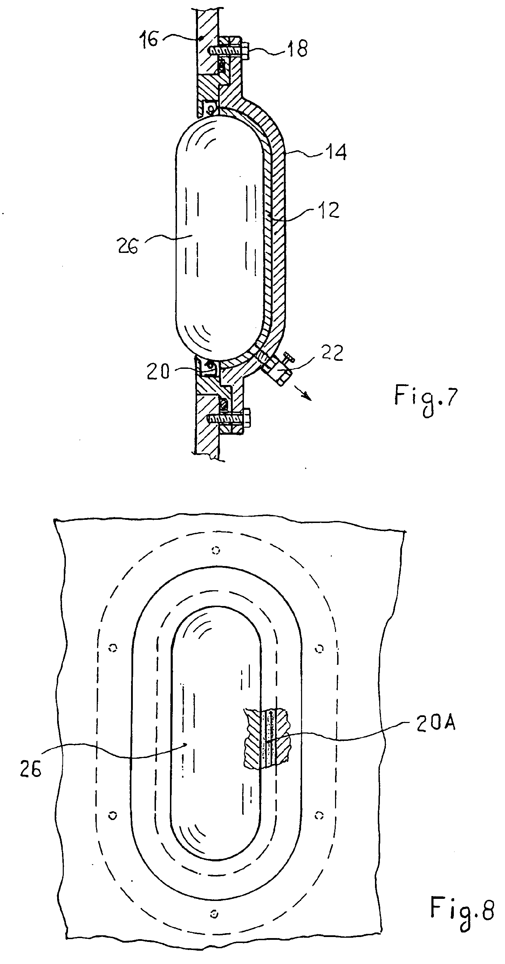

Figure 7 is a similar view of Figure 5 but showing a freely rotating cylindrical roller 26;
Figure 8 is a front view of the roller of Figure 7 but with a detail of the seal 20A;

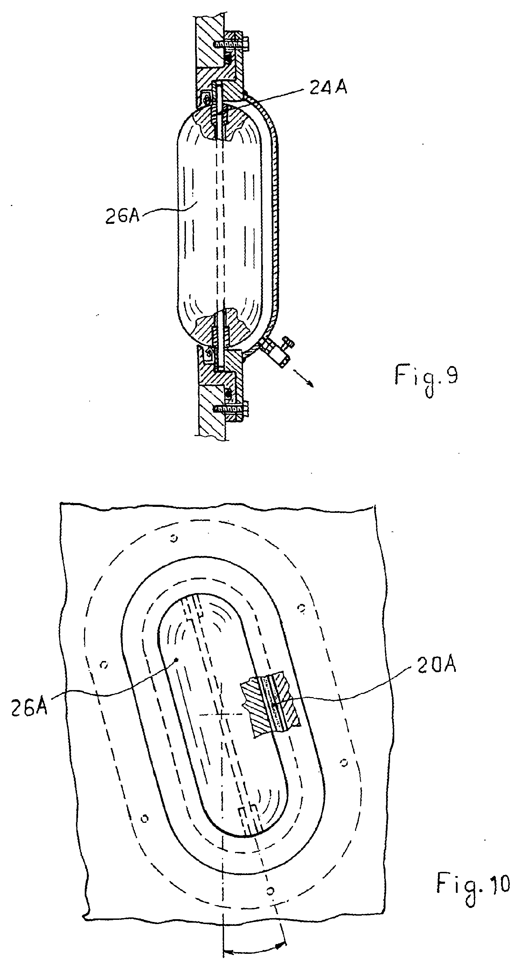

Figure 9 is a similar view of Figure 7 but showing a cylindrical roller 26A rotating around a fixed axis 24A;
Figure 10 is a front view of the roller of Figure 9 with a detail of the seal 20A;

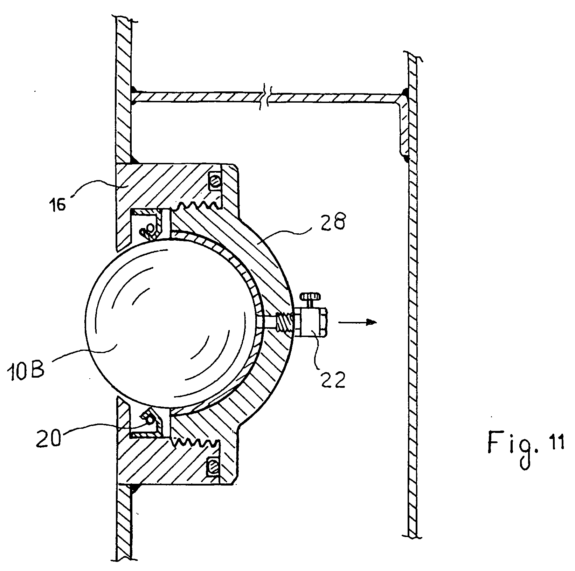

Figure 11 shows a freely rotating ball 10B applied inside a threaded housing 28 which is part of the bulkheads such as those of an oil-tanker's hull;

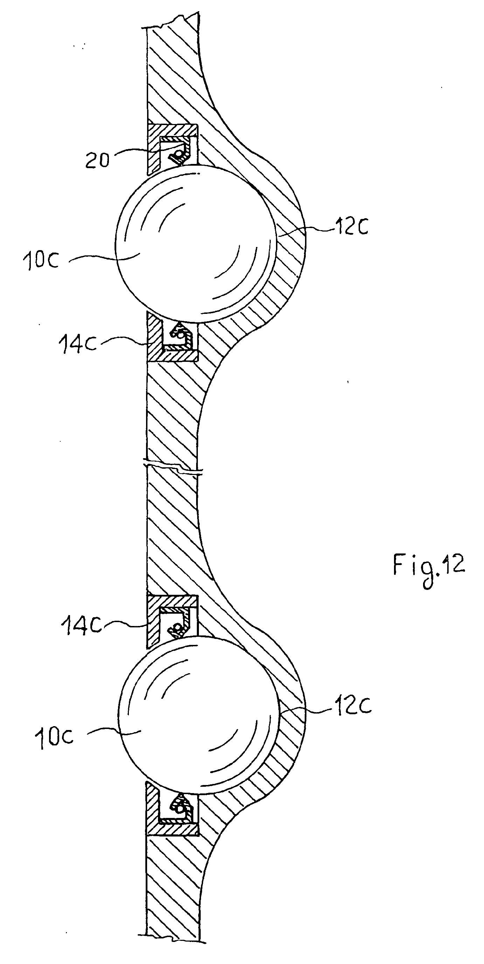

Figure 12 shows two freely rotating balls 10C made of a plastic material applied inside housings 12C of a fibreglass hull of a small recreational water vessel, closed by a plate 14C which is simply pressure applied from the outside for closing the housing 12C, for this reason this solution is particularly easy and cheap and is especially suitable for small watercrafts;

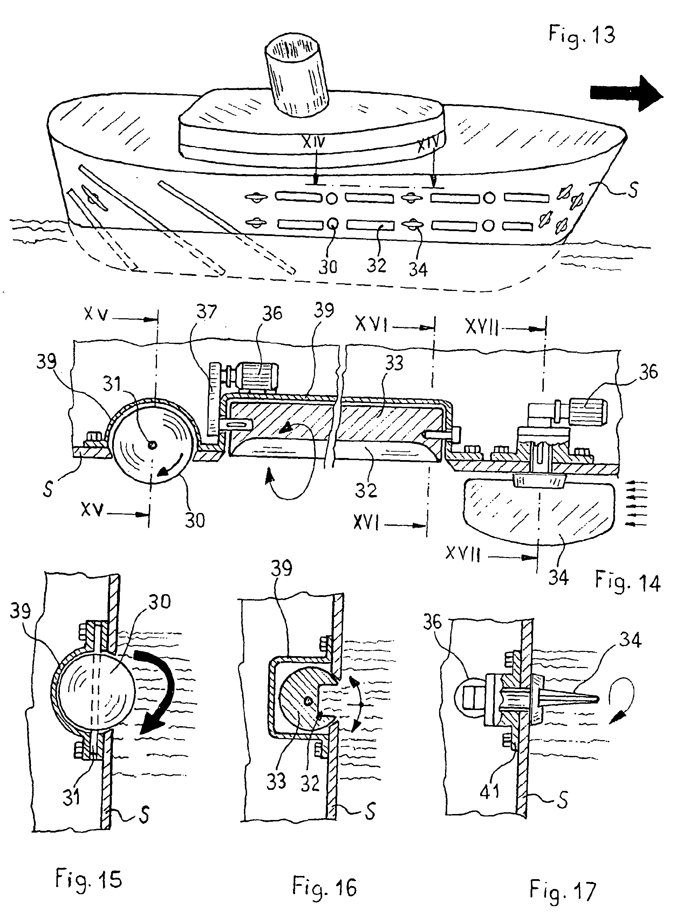

Figure 13 a diagrammatic view of a ship having a hull S whereon the rotating bodies 30, the channels 32 and the blades 34 are built at the same time, in a completely explanatory but not limiting way;
Figure 14 is a section drawn along the line XIV - XIV of Figure 13 which shows in an explanatory way but with greater details, a rotating body shaped as a ball 30, a channel 32 with a revolving element 33 and a blade 34 wherein the revolving element 33 and the blade 34 are each set on by a transmission 37 from a corresponding gearmotor unit 36, with the object of varying, as desired, their angle in order to modify respectively the vessel's performance;
Figure 15 is a section drawn along the line XV - XV of Figure 14 showing the ball 30 freely rotating around its own axis 31;
Figure 16 is a section drawn along the line XVI - XVI of Figure 14 showing the revolving element 33 inserted into the supporting shell 39 in the water receiving position inside the channel 32;
Figure 17 is a section drawn along the line XVII - XVII of Figure 14 showing the blade 34, it too being revolving in order to increase or decrease the thrust according to the manoeuvres to be carried out with its fixed bearing 41 holding the gearmotor 36;

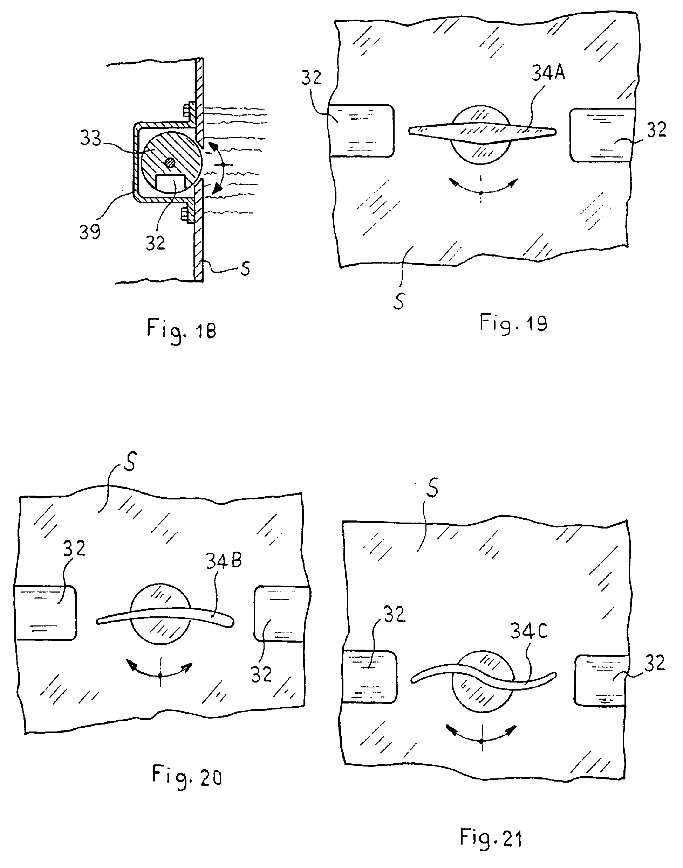

Figure 18 is a similar view of Figure 16, showing the revolving element 33 in the lock position of the water entrance into the corresponding channel 32;
Figure 19 is a diagrammatic front view of a blade 34A of a mostly flat shape;
Figure 20 is a similar view of Figure 19 of a revolving blade 34B of a curved shape;

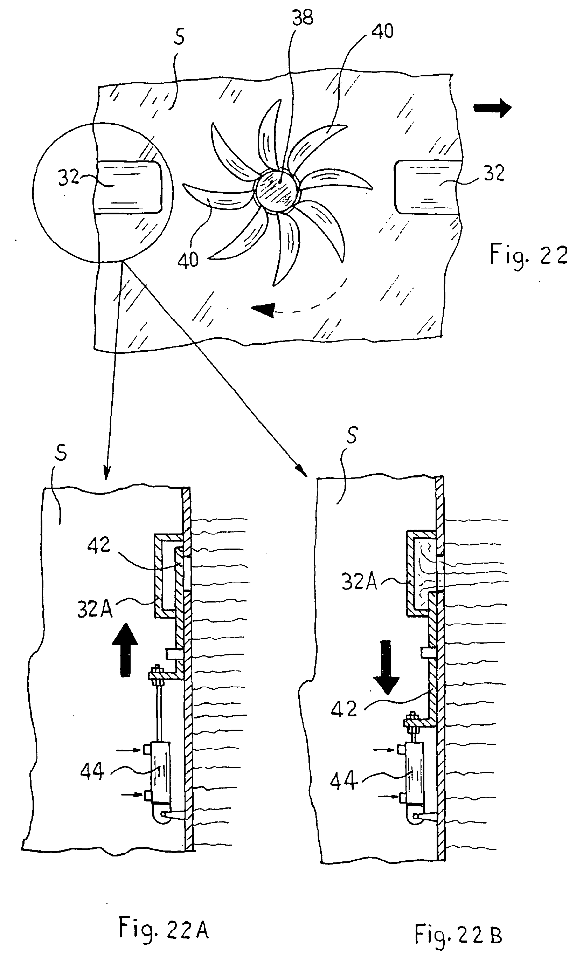

Figure 21 is a similar view of Figure 19 of a revolving blade 34C of a waved shape;
Figure 22 is a front view of a bladed wheel or propeller 38 with spoon-like blades 40. This wheel is put on the two broadsides of the boat preferably next to the stem and has the function of facilitating the sheer in a quick and precise manner with an improvement of the boat's stability; it too being set on by a gearmotor; and
Figures 22A and 22B show the lock 42 of the inner channel 32A of the bulkheads of the boat, in the lock position of the water entrance into the channel and of the water entrance into it respectively, here too through a drive with a hydraulic cylinder 44.

All of these drives are made with oil hydraulic cylinders and gearmotors which are connected through an hydraulic control unit that it too is connected to a set electronic device named PLC which controls the various operative functions. Thanks to this electronic control device is hence possible to modify the various planned settings according to the weather conditions, the sea conditions, the load and/or the speed of the vessel and so on, in order to monitor with the utmost timeliness the operation of the boat.

The system of the present invention is not yet limited to the application on watercrafts but it could also be extended to road vehicles and/or aircrafts with the object of improving the aerodynamic or control performance of the vehicle's motion.

Clearly, the practical details of the making of the system should be studied each time according to the type of water vessel, of their shape and of many other variables, more specifically the possible effects on the boat's performance, such as floating, the turning, and during the turbulence caused by the medium, without falling out of the main scope of the invention consisting in the application of rotating bodies, channels and/or blades to a boat's hull, as it is also recited in the appended claims.

## Claims

1. A system for improving the handiness of a boat's hull (16) and for reducing its friction with water, thus transforming the pressure and wake energy of the liquid mass into rotation work, comprising a number of bodies of revolution (10, 26, 30), blades (34) or bladed wheels (38), said bodies (10, 26, 30) being lodged into housings recessed from the outer surface of said hull (16) and protruding from said hull (16) with the least extent necessary to generate their rotation by the water surrounding the boat, **characterized in that** the system comprises outer (32) and inner channels (32A) with respect of the surface of said boat's hull, the water inflow to said inner channels (32A) being adjustable through a mechanical and electronic system up to the complete closure of its entrance, with a consequent return to the original hull's outline.

2. The system according to claim 1, **characterized in that** the liquid inflow to said outer channels (32) is adjusted by a mobile device (33) located at the beginning of the channel (32) which modulates the incoming liquid, with the possibility of returning to the original hull's outline.

3. The system according to claim 2, **characterized in that** said mobile device (33) and said blades (34) are each set on by a transmission (37) from a corresponding gearmotor unit (36), with the object of varying, as desired, their angle in order to modify respectively the boat performance.

4. The system according to claim 1, **characterized in that** said inner channels (32A) are provided with a lock (42) driven by a hydraulic cylinder (44) for controlling the water inflow to said inner channels (32A).

5. The system according to claim 3, **characterized in that** said gearmotor unit (36) of said blades (34) is housed in the fixed bearing (41) of said blades (34).

6. The system according to claim 1, **characterized in that** said bladed wheels (38) are provided in order to facilitate the sheer in a quick and precise manner, with an improvement of the boat's stability, said bladed wheels (38) being set on by a proper gearmotor.

7. The system according to one or more of the previous claims, **characterized in that** the state of said rotating bodies (10, 26, 30), blades (34), bladed wheels (38), outer (32) and inner channels (32A) and the driving units (36, 44) of the various mobile elements are connected to an hydraulic control unit, it too controlled by a programmed electronic device able to actively change the different settings of said rotating bodies (10, 26, 30) and said mobile elements.

8. The system according to one or more of the previous claims, applicable to road vehicles and/or aircrafts with the object of improving the aerodynamic or control performance of the vehicle's motion.

## Patentansprüche

1. System zur Verbesserung der Manövrierbarkeit des Schiffrumpfes (16) und zur Reduzierung der Reibung, die auf diese Weise den Druck und die Wellenenergie der Wassermasse in Rotationsarbeit durch rotierende Körper (10, 26, 30), Schaufeln (34) oder rotierende Schaufeln (38) verarbeitet. Diese Körper sind in der äußeren Oberfläche solcher Rümpfe (16) versteckte Gehäuse eingesetzt und ragen von solchen Rümpfen (16) mit der niedrigsten der Produktion ihrer vom umliegenden Wasser verursachten Rotation notwendigen Ausdehnung hervor. Dieses System ist **dadurch gekennzeichnet, dass** es äußere (32) und innere (32A) Kanäle im Zusammenhang mit der Oberfläche des Rumpfes (32A) einschließt. Es besteht auch die Möglichkeit den Wasserzufluss ins Innere der Kanäle durch ein mechanisches und elektronisches System bis zur vollständigen Schließung seines Zuflusses zu regeln, mit der folgenden Rückkehr zum ursprünglichen Profil des Rumpfes.

2. System nach Anspruch 1 **dadurch gekennzeichnet, dass** der Wasserzufluss in solche äußere Kanäle (32) durch eine bewegliche am Anfang der Kanäle sitzende Vorrichtung (33) regulierbar ist, die den Wasserzufluss regelt und die Rückkehr zum ursprünglichen Profil des Rumpfes ermöglicht.

3. System nach Anspruch 2 **dadurch gekennzeichnet, dass** sowohl die bewegliche Vorrichtung (33) und als auch die Schaufeln (34) durch ein entsprechendes motorisiertes Getriebe (36) bei der Transmission manövriert werden. Ziel ist die erwünschte Variation ihrer Ecke, um die Leistungen des Bootes zu verändern.

4. System nach Anspruch 1 **dadurch gekennzeichnet, dass** solche innere Kanäle (32A) mit einer durch einen hydraulischen Zylinder (44) kontrollierten Blockierung (des Zuflusses) ausgerüstet sind, die zur Kontrolle des Wasserzuflusses in die inneren Kanäle dient.

5. System nach Anspruch 3 **dadurch gekennzeichnet, dass** das motorisierte Getriebe (36) der Schaufeln (34) in die festen Halter der Schaufeln (34) selbst eingesetzt ist.

6. System nach Anspruch 1 **dadurch gekennzeichnet, dass** die Struktur von solchen Rädern mit Schaufeln (38) das schnelle und genaue Abdrehen mit der folgenden verbesserten Stabilität des Bootes ermöglicht, da die rotierenden Schaufeln durch ein entsprechendes motorisiertes Getriebe manövriert werden.

7. System nach einem oder mehreren der oben angegebenen Ansprüchen **dadurch gekennzeichnet, dass** die Stellung dieser rotierenden Körper (10, 26, 30), Schaufeln (34), rotierenden Schaufeln (38), äußere (32) und innere (32A) Kanäle und die Steuerungseinheiten (36, 44) der unterschiedlichen beweglichen Elemente mit einer hydraulischen Steuerungseinheit verbunden sind, auch durch elektronische vorprogrammierte Vorrichtungen kontrolliert, die die unterschiedlichen Stellungen der rotierenden Körper (10, 26, 30) und der beweglichen Elemente modifizieren können.

8. System nach einem oder mehreren der oben angegebenen Ansprüchen für Strassen- und/oder Flugfahrzeugen anwendbar, um die Verbesserung der Aerodynamik oder die Kontrolle der Leistungen der Bewegung des Fahrzeugs zu erhalten.

## Revendications

1. Système améliorant la manoeuvrabilitè de la coque d'un bateau (16) et réduisant son frottement sur l'eau ; de cette manière, la pression et l'énérgie des vagues de la masse liquide sont transformées en travail de rotation, grâce à un nombre de corps en rotation (10, 26, 30), palettes (34) ou palettes rotatives (38), ces corps (10, 26, 30) étant disposés dans des logements cachés par la surface extérieure des bateaux (16) et dépassant les coques de la moindre extension nécessaire à engendrer leur rotation provoquée par l'eau entourant le bateau. Le système est **caractérisé par le fait qu'**il comprend des canaux extérieurs (32) et intérieurs (32A) reliés à la surface de la coque du bateau (32A), avec la possibilité de régler l'entrée de l'eau à l'intérieur des canaux, grâce à un système mécanique et électronique jusqu'à la complète fermeture de l'entrée de l'eau et au retour au profil original de la coque.

2. Système selon la revendication 1 **caractérisée par le fait que** l'afflux de liquide aux canaux extérieurs (32) est réglable grâce à un dispositif mobile (33), placé à l'entrée des canaux (32), qui module l'entrée même du liquide avec la possibilité de retourner au profil original de la coque.

3. Système selon la revendication 2, **caractérisée par le fait que** ce dispositif mobile (33) et ces palettes (34) sont chacun manoeuvré dans la transmission (37) par un correspondant changement motorisé (36), dans le but de changer, selon la nécessité, leur angle pour modifier les performances du bateau.

4. Système selon la revendication 1, **caractérisée par le fait que** ces canaux intérieurs (32A) sont équipés d'un bloc du flux (42) contrôlé par un cylindre hydraulique (44) pour contrôler l'afflux d'eau dans ces mêmes canaux intérieurs (32A).

5. Système selon la revendication 3, **caractérisée par le fait que** cette unité de changement motorisé (36) des palettes (34) est logée dans les paliers fixes (41) des palettes mêmes.

6. Système selon la revendication 1, **caractérisée par le fait que** ces roues à palettes (38) sont organisées de telle manière à faciliter le virage de façon rapide et précise, améliorant la stabilité du bateau, ces palettes rotatives étant manoeuvrées (38) par un approprié changement motorisé.

7. Système selon l'une ou plusieurs des précédentes revendications, **caractérisées par le fait que** la position de ces corps ritatifs (10, 26, 30), palettes (34), palettes rotatives (38), canaux extérieurs (32) et intérieurs (32A) et les unités de commande (36, 44) des différents éléments mobiles sont reliés à une unité hydraulique de contrôle, contrôlée à sa fois par deux dispositifs électroniques programmés en mesure de modifier activement les différentes positions de ces corps rotatifs (10, 26, 30) et de ces éléments mobiles.

8. Système selon l'une ou plusieurs des précédentes revendications, applicables à des véhicules routiers et/ou à des aéromobiles dans le but d'améliorer l'aérodynamique ou de contrôler les performances du mouvement du véhicule.
